# EUROPEAN PATENT APPLICATION

(11) **EP 3 401 868 A1**
(43) Date of publication of application: **14.11.2018**
(21) Application number: 17169943.2
(22) Date of filing: 08.05.2017
(51) Int. Cl.: G06Q 30/06, G06Q 30/02

(54) **METHOD AND SYSTEM TO SUPPORT INTERNET BASED DISTRIBUTION OF GOODS AND SERVICES**

(71) Applicant: Purchase Button Inc., Lewes, DE 19958 (US)
(72) Inventor: CELIKADAM, Hakan, 44357 Dortmund (DE); AYDIN, Mohammed Sena, 34220 Istanbul (TR)
(74) Representative: Rausch Wanischeck-Bergmann Brinkmann

(57) **Abstract**

The present invention is directed to a method and a system to support the internet based distribution of goods and services which makes it easier for customers to get a direct connection to its supply source whereby
a) pictures, descriptions and/or further internet based presentations of goods and services will be collected together with source information as a data base information in a data base,
b) goods and services will be identified by a unique identification code,
c) the data base information will be connected to the identification code,
d) an application is connected to receive the data base information,
e) the application informs the customer when the website he is visiting includes goods and services which are available in the data base and
f) in case of positive interest confirmed by the customer the application is connecting the customer to the source.

## Description

The present invention is directed to a method and a system to support the internet based distribution of goods and services.

Typically it is known that customers are surfing through the internet thereby using computers with browser which are connected to the data network like the internet.

Customers are surfing through websites of different suppliers thereby looking for information about goods and services. This information refers to quality, distribution details, prices and the like.

For several specific goods and services it is known that web applications search websites themselves to find respective goods and services. However, this happens by different search parameters and therefore is never complete nor the best choice.

On the other hand, in case customers are interested in specific goods and services, it is very often very difficult for them to find respective suppliers where they can purchase the products.

Based on the described state of the art the present invention is directed to a method which improves the internet based distribution of goods and services and makes it easier for customers to get a direct connection to its supply source.

To reach this goal the invention presents a method with the features according to claim 1. Further features and advantages are disclosed in the sub claims. Furthermore a system with the features according to claim 8 is disclosed.

According to the invention all kind of product information like pictures, descriptions or other internet based presentations for goods and services will be collected directly or indirectly within a data base as data base information. Indirectly means by address, directly means as a copy. To this information a source information, usually in form of an URL is added. Furthermore the system is providing a unique identification code for the respective product and services.

So the data base information with regard to all the presentations of goods and services are identifiable by an identification code.

An application which is made to a company a customer when he is surfing through the internet is connected to receive the data base information. Whenever the customer reaches websites where respective product information is available, the application is notifying this and is giving a hint to the customer that he can directly be connected to the source. In case of positive interest confirmed by the customer the application is connecting the customer to the source via their URL.

So a customer can start a purchase procedure directly without further searches.

This gives the customer a very comfortable way for product search and purchase.

The application can accompany the customer as a shadow application to his browser, a browser extension or application. It is placing a kind of purchase button so that a customer in case of being interested in further details with regard to a product identified by the application he can just click a kind of icon and thereby be connected to the prior websites and the like.

According to the invention a system able to proceed according to the inventive method is provided.

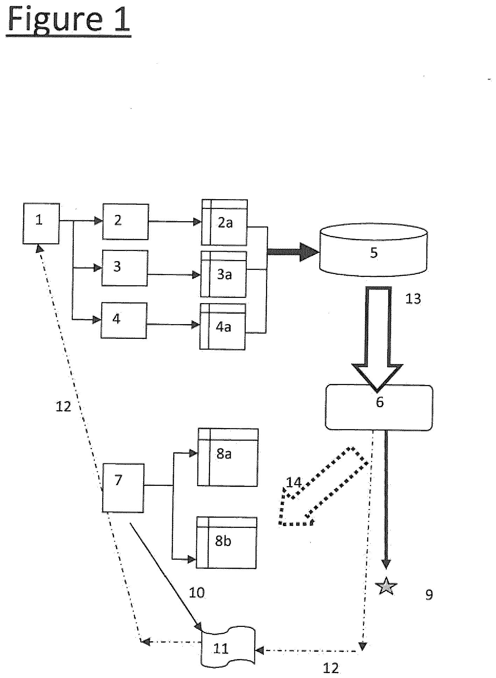

More details and information become obvious from the description of an example which is according to figure 1 identified by a kind of flow chart.

According to this scheme a supplier 1 is identifying his different products 2, 3, 4 by their presentations 2a, 3a and 4a. All these are included in a data base 5 which is stored in a computer system. The computer system adds they unique identifier as well as the URL of the supplier 1. An application 6 is connected to the data base 5 via line 13 to have full access to the information.

A customer 7 is surfing through the internet and thereby visiting different websites 8a, 8b and the like. The application 6 is observing this surfing process as a shadow viewer 14. It always checks whether or not products identified on the respective website are continued in the data base 5. In case there is a match the application 6 issues a signal 9 to be seen by the customer 7. This indicates to the customer 7 that these products can be purchased or further information can be received on a direct line by just giving a confirmation signal. This status is shown as arrow 10 to a connection routine of the application 6. In case the confirmation signal 10 is given the application 6 provides direct connection information to the customer 7 and his browser so that customer 7 is directly connected to the website of the supplier 1. This connection process is identified by arrow line 12.

This shows that the customer 7 can surf through the internet thereby visiting different websites and can spontaneously decide to get more information or be connected to a supplier in case the application 6 gives a signal 9 which shows that further connection or information is available.

This supports easier distribution of goods and services via internet thereby using the information resources provided by the supply chain.

### Reference Numerals

- 1: customer
- 2: product
- 3: product
- 4: product
- 2a: product presentation
- 3a: product presentation
- 4a: product presentation
- 5: data base
- 6: application
- 7: customer
- 8a: website
- 8b: website
- 9: availability signal
- 10: interest decision
- 11: connection process
- 12: connection
- 13: data base availability

## Claims

1. A method to support the internet based distribution of goods and services, comprising:
a) collecting pictures, descriptions and/or further internet based presentations of goods and services together with source information as a data base information in a data base;
b) identifying goods and services by a unique identification code;
c) connecting the data base information to the identification code;
d) connecting an application to receive the data base information;
e) the application informing a customer when a website includes goods and services that are available in the data base; and
f) connecting the customer to the source based on positive interest confirmed by the customer.

2. A method according to claim 1, wherein the source information collected into the data base is an URL information.

3. A method according to claim 1, wherein the application is intended to accompany an internet surfing customer.

4. A method according to claim 3, wherein the application is accompanying the customer as a browser extension to his browser.

5. A method according to claim 3, wherein the application is connecting the customer to the URL of a supplier.

6. A method according to claim 1, wherein the customer is starting a purchasing process when connected to the URL of the supplier.

7. A method according to claim 1, wherein the product/service-information as pictures, descriptions and/or further internet based presentations of the goods and services will be provided to the data base directly by a supplier.

8. A system to support the internet based distribution of goods and services, comprising:
a) at least one computer for storing and allowing the administration of a data base;
b) a data network for online administration of the data base;
c) at least one computer to surf within the internet using a browser via a data network; and
d) an application combined to the browser observing the websites visited by the customer, wherein the application is prepared to indicate to the customer a match of presentations of the products and services on the visited websites and information about products and services in the data base, and to connect the customer to a website of the source of respective products and services upon a decision of the customer.
